# FASCICULE DE BREVET EUROPEEN

(11) **EP 3 050 432 B1**
(45) Date de publication et mention de la délivrance du brevet: **21.06.2017**
(21) Numéro de dépôt: 16153067.0
(22) Date de dépôt: 28.01.2016
(51) Int. Cl.: A01K 7/00, B65D 1/42, B65D 1/46, A01K 7/02

(54) **ABREUVOIR À PAROIS RENFORCÉES**
TRÄNKE MIT VERSTÄRKTEN WÄNDEN
DRINKING TROUGH WITH REINFORCED WALLS

(30) Priorité: 29.01.2015 FR 1550680
(43) Date de publication de la demande: 03.08.2016
(73) Titulaire: La Buvette, 08090 Tournes (FR)
(72) Inventeur: BOUSQUET, Jean-Philippe, 51480 Belval-sous-Châtillon (FR)
(74) Mandataire: Hugues, Catherine

(56) Documents cités:
- EP-A2- 1 336 569
- US-A- 4 756 425
- US-A- 5 406 909

## Description

La présente invention a pour objet un bac pour l'abreuvement d'animaux comportant un fond surmonté par une paroi périphérique présentant une face interne, une face externe, une extrémité inférieure reliée audit fond et un chant supérieur délimitant une ouverture d'accès au volume interne dudit bac, ladite paroi latérale comportant au moins deux flancs parallèles d'allure générale plane. Voir p.e. le document US-A-5406909. Il existe à l'heure actuelle de nombreux modèles de bacs destinés à l'abreuvement d'animaux élevés sur des pâturages. Généralement réalisés en matériaux plastiques ou composites tels que par exemple des résines de polyéthylène, ils se distinguent les uns des autres principalement par leur volume, ou par leur forme.

De manière connue, en cours d'utilisation, de tels bacs sont soumis à de nombreuses contraintes.

Ils doivent ainsi être conçus de manière à pouvoir résister aux chocs subis pendant leur transport ou de la part des animaux venus s'y désaltérer. De tels bacs doivent par ailleurs se révéler aptes à supporter durablement les différentes agressions environnementales rencontrées, telles que notamment le gel ou un rayonnement solaire important. En outre, ils doivent également tolérer aussi bien le contact prolongé avec le sol, les pierres, les herbes et autres matières végétales présentes dans les pâturages, que les produits détergents ou les jets à haute pression employés pour leur nettoyage et/ou désinfection.

Par ailleurs, la structure de tels bacs d'abreuvement doit être étudiée de manière telle qu'ils soient aptes à supporter la pression exercée par l'eau qu'ils contiennent sur leur paroi périphérique de sorte à éviter toutes déformations intempestives de cette dernière ainsi que de son bord supérieur. De telles déformations sont plus particulièrement rencontrées dans le cas de bacs de forme parallélépipédique ou ovale présentant des flancs d'allure plane qui tendent à s'incurver progressivement sous l'effet de la chaleur ou du poids de l'eau.

Une solution pour répondre à la problématique de déformation des cuves d'abreuvement sous l'effet de la chaleur ou de la pression exercée par l'eau, consiste classiquement à en prévoir la paroi périphérique suffisamment épaisse. Cette solution n'est cependant pas tout à fait satisfaisante étant donné qu'elle suppose une consommation de matière première plus importante et donc un coût de fabrication accru.

Une autre solution classique permettant de limiter les déformations évoquées consiste à conférer à la paroi périphérique une structure en « escalier » dans laquelle elle comporte une pluralité d'épaulements s'échelonnant dans des plans parallèles au fond du bac et jouant le rôle de « raidisseurs ». Ces épaulements peuvent en outre être complétés par une pluralité de nervures verticales plus ou moins profondes réparties autour de la paroi périphérique et permettant de rigidifier encore davantage cette dernière. Néanmoins, cette solution s'avère également insatisfaisante étant donné qu'elle est aussi trop consommatrice de matière première et qu'elle génère en outre des difficultés de nettoyage des bacs dont la structure comporte une multiplicité d'angles propices au développement d'algues et à la rétention de salissures en tout genre.

La présente invention vise à proposer une solution alternative permettant de réduire fortement, voire supprimer toute déformation intempestive d'un bac de pâturage du type décrit précédemment sous l'effet notamment de la chaleur ou de la pression exercée par l'eau qui y est contenue, tout en réduisant la quantité de matière première nécessaire à sa fabrication. Ceci permet avantageusement non seulement d'alléger un tel bac mais également de réduire son coût de fabrication. Un autre but de l'invention est également de fournir un bac d'abreuvement dont le nettoyage peut être réalisé avec facilité et efficacité.

A cet effet, l'invention a pour objet un dispositif du genre indiqué en préambule, comme défini dans la revendication 1 et dans lequel au moins un desdits flancs comporte au moins une zone de renfort mécanique dans laquelle la paroi périphérique présente une première déformation et une deuxième déformation imbriquées l'une dans l'autre. Etant donné qu'une telle structure ne comporte aucune zone présentant une surépaisseur, elle peut avantageusement être obtenue à partir d'une quantité de matière première réduite, ce qui permet d'en limiter le coût de fabrication. D'autre part, une série de tests ont été effectués qui ont permis de démontrer que la présence de telles zones de renfort mécanique, sur chacun des flancs de la paroi périphérique d'un bac améliore très notablement leur robustesse et leur permet par conséquent de résister beaucoup mieux aux différentes contraintes subies que les bacs de type classique décrits ci-dessus.

Selon l'invention, lesdites première et deuxième déformations imbriquées l'une dans l'autre peuvent présenter différentes conformations. Elles peuvent notamment être définies alternativement par un renflement et un renfoncement ou un renfoncement et un renflement ou deux renflements ou, mais pas selon l'invention, deux renfoncements par rapport à la face externe de la paroi périphérique.

Conformément à une variante de réalisation avantageuse de l'invention, la première déformation s'étend sur une certaine hauteur depuis l'extrémité inférieure de la paroi périphérique, tandis que la deuxième déformation s'étend depuis l'extrémité inférieure jusqu'au chant supérieur de la paroi périphérique, lesdites premières et deuxième déformations présentant une forme de trapèze, les bases du premier trapèze formant la première déformation étant de dimensions inférieures à celles des bases du second trapèze formant la deuxième déformation.

Dans ce cas, l'invention prévoit que la grande base du premier trapèze et la petite base du second trapèze peuvent être alignées le long de l'extrémité inférieure de la paroi périphérique, ce qui conduit à une configuration dans laquelle les deux déformations en forme de trapèze sont tête-bêche et permettent une meilleure répartition des éventuelles pressions et contraintes mécaniques infligées.

Selon une caractéristique additionnelle de la présente invention, la première déformation peut présenter une profondeur constante sur l'ensemble de sa hauteur tandis que la deuxième déformation peut présenter une profondeur qui diminue de manière linéaire entre l'extrémité inférieure et le chant supérieur de la paroi périphérique.

Par ailleurs, la première déformation présente préférentiellement une profondeur comprise entre 5mm et 50mm tandis que la deuxième déformation présente préférentiellement, au niveau de l'extrémité inférieure de la paroi périphérique, une profondeur maximale comprise entre 5mm et 50mm.

La présente invention prévoit par ailleurs que la zone de renfort mécanique s'étend de préférence sur une longueur supérieure à au moins le tiers de celle d'un flanc latéral.

En outre, conformément à une variante de réalisation préférentielle, la zone de renfort mécanique est délimitée par deux tronçons de raccordement s'étendant transversalement audit flanc le long de chacun des côtés du second trapèze, chacun desdits tronçons comportant un bord inférieur formant un angle obtus avec la petite base dudit second trapèze.

Lesdits tronçons de raccordement sont de préférence symétriques par rapport à un plan perpendiculaire au fond dudit bac.

Une caractéristique avantageuse du bac d'abreuvement selon l'invention est encore définie par le fait que la paroi périphérique présente au moins une constriction s'étendant sur au moins une partie de sa périphérie.

La présente invention sera mieux comprise à la lecture de la description d'un exemple de réalisation faite en référence aux figures annexées, fournies à titre d'exemples non limitatifs, et dans lesquelles :
- La figure 1 illustre une vue en perspective d'un bac pour l'abreuvement d'animaux selon l'invention,
- La figure 2 représente une vue de côté du bac de la figure 1,

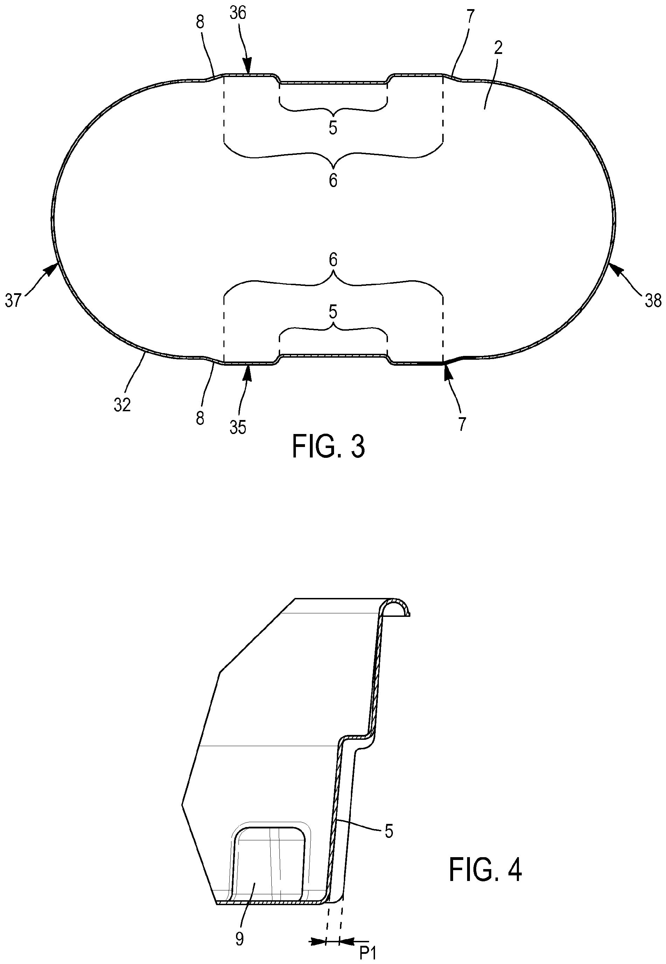

- La figure 3 représente une vue en coupe selon JJ de la figure 2,
- La figure 4 représente une vue partielle de la coupe selon II de la figure 2,

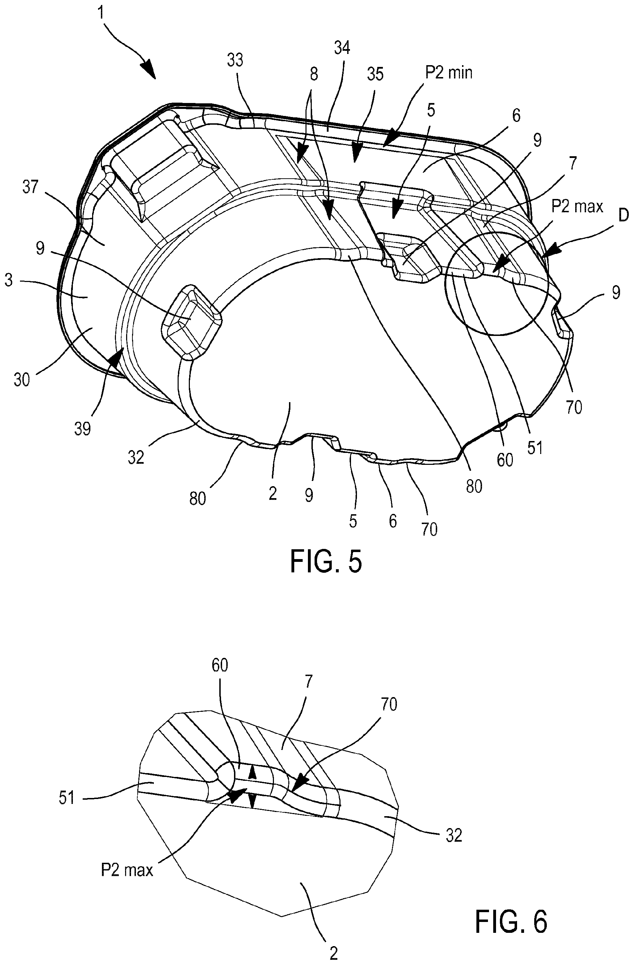

- La figure 5 représente une vue de dessous du bac de la figure 1, et
- La figure 6 représente une vue agrandie du détail D de la figure 5.

En référence aux figures, la présente invention a trait à un bac 1 pour l'abreuvement d'un troupeau d'animaux placés sur une zone de pâturage. De manière classique, un tel bac 1 présente un volume important, généralement compris entre 400l et 1500l choisi en fonction du nombre d'animaux que comporte le troupeau, et est constitué d'un matériau imputrescible, résistant notamment aux détergents, aux UV et au gel, tel que du polyéthylène alimentaire, une résine de polyéthylène ou tout matériau équivalent, de préférence recyclable.

Bien que dans la variante de réalisation illustrée le bac 1 présente une forme ovoïde, il est à noter que la présente invention s'applique également à d'autres formes de bacs d'abreuvement rencontrées sur le marché, notamment rectangulaires.

Le bac 1 selon l'invention comporte de manière classique un fond 2 surmonté par une paroi périphérique 3 présentant une face interne 30, une face externe 31, une extrémité inférieure 32 reliée au fond 2 et un chant supérieur 33 délimitant une ouverture d'accès 4 au volume interne du bac 1. Le chant supérieur 33 est prolongé par un rebord 34 s'étendant vers l'extérieur du bac 1.

Dans la variante de réalisation illustrée, la paroi latérale 3 du bac 1 comporte deux flancs latéraux 35, 36 parallèles entre eux et d'allure générale plane. Ils sont reliés entre eux par deux flancs opposés 37, 38 de forme incurvée. La paroi périphérique 3 présente par ailleurs une constriction s'étendant sur l'ensemble de sa périphérie et formant, dans cette variante, un épaulement 39 s'étendant dans un plan parallèle au fond 2. L'épaulement 39 joue, de manière connue, le rôle d'un raidisseur permettant d'améliorer la robustesse de la paroi périphérique 3. Bien que comportant ici des arêtes linéaires, l'épaulement 39 pourrait bien entendu présenter une structure différente, par exemple dans laquelle ses arêtes forment une succession de vagues, dans la mesure toutefois où cette structure est équivalente en termes de fonction et lui permet de jouer le rôle de raidisseur escompté.

Conformément à l'invention, dans l'exemple illustré, chacun des flancs d'allure plane 35, 36 comporte en outre une zone de renfort mécanique dans laquelle la paroi périphérique 3 présente une première déformation 5 et une deuxième déformation 6 imbriquées l'une dans l'autre, formant respectivement un renfoncement et un renflement par rapport à la face externe 30 de la paroi périphérique 3.

En fait, en référence aux figures, dans l'exemple représenté, la première déformation 5 est définie par un renfoncement de profondeur P1 constante, par exemple comprise entre 5mm et 50mm. Elle présente une forme de trapèze s'étendant depuis l'extrémité inférieure 32 de la paroi périphérique 3 jusqu'au-dessus de l'épaulement 39. La deuxième déformation 6 est définie par un renflement qui présente lui aussi une forme de trapèze mais dont les dimensions sont supérieures à celles du premier trapèze définissant la première déformation 5. Le deuxième trapèze définissant la deuxième déformation 6 s'étend ainsi depuis l'extrémité inférieure 32 jusqu'au chant supérieur 33 de la paroi périphérique 3 et intègre en quelque sorte la première déformation 5. La deuxième déformation présente une profondeur P2 qui diminue de manière linéaire entre l'extrémité inférieure 32 et le chant supérieur 33 de la paroi périphérique 3. Ainsi, au niveau de l'extrémité inférieure 32 de la paroi périphérique 3, la profondeur P2 atteint sa valeur maximale P2max, préférentiellement comprise entre 5mm et 50mm, tandis qu'au niveau du chant supérieur 33 de la paroi périphérique 3 la profondeur P2 atteint sa valeur minimale P2min égale à 0.

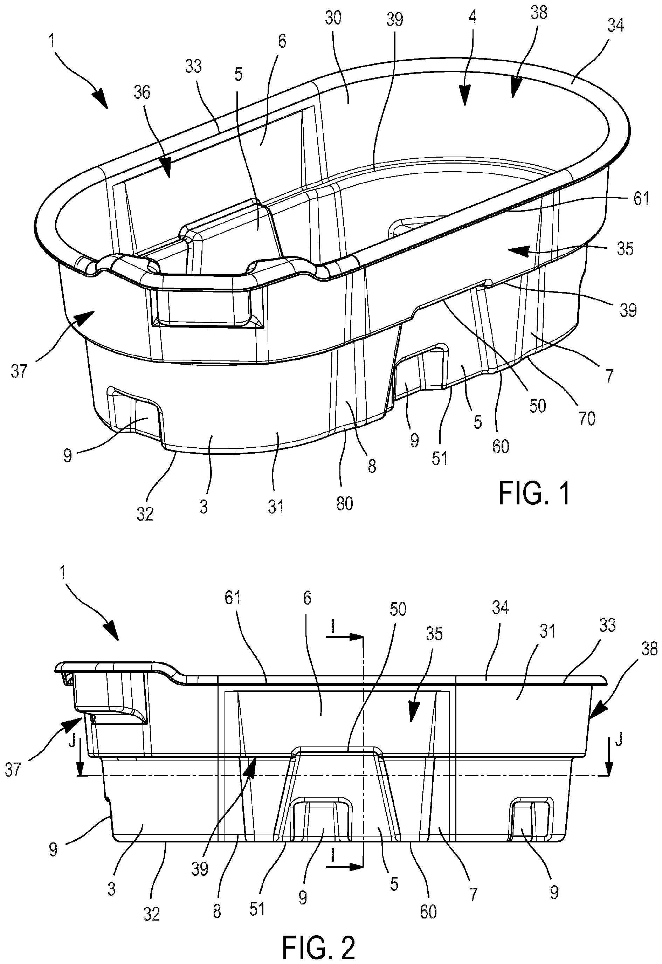

D'autre part, en référence à la figure 2, la grande base 51 du premier trapèze et la petite base 60 du second trapèze sont alignées le long de l'extrémité inférieure de la paroi périphérique. Ainsi les deux trapèzes formant les première et deuxième déformations 5, 6 sont positionnés tête-bêche ce qui constitue un avantage indéniable du point de vue de la répartition des forces exercées sur la paroi périphérique 3 par l'eau contenue dans le bac 1.

Conformément à l'invention, dans l'exemple illustré, la zone de renfort mécanique définie par les première et deuxième déformations 5, 6 s'étend par ailleurs sur une longueur équivalent à environ la moitié de celle d'un flanc latéral d'allure plane 35, 36. En fait, il a été constaté qu'une zone de renfort devait couvrir au moins le tiers de la longueur d'un flanc 35, 36 pour obtenir l'effet attendu de meilleure résistance à la déformation de la paroi périphérique 3.

Conformément à une autre caractéristique avantageuse du bac 1 selon l'invention, chaque zone de renfort mécanique est délimitée par deux tronçons de raccordement 7, 8 s'étendant transversalement au flanc d'allure plane 35, 36 considéré, le long de chacun des côtés du second trapèze formant la seconde déformation 6. Les tronçons de raccordement 7, 8 sont symétriques par rapport à un plan perpendiculaire au fond 2 du bac 1 et comportent respectivement un bord inférieur 70, 80 formant un angle obtus avec la petite base 60 du second trapèze définissant la deuxième déformation 6. Une telle configuration permet d'éviter d'éventuelles zones de fragilité qui pourraient être représentées par d'éventuels angles aigus formés entre la deuxième déformation 6 et la paroi périphérique 3.

Dans la variante de réalisation illustrée, la paroi périphérique 3 du bac 1 comporte également des plots de gerbage 9 répartis autour de sa périphérie et s'étendant sur une certaine hauteur de paroi depuis le fond 2. En référence aux dessins, de tels plots de gerbage peuvent être situés dans la zone de renfort mécanique de chaque flanc d'allure plane 35, 36 sans nuire à la fonction de renfort mécanique de cette zone qui vient d'être décrite.

Bien entendu, de nombreuses modifications peuvent être apportées aux exemples décrits ci-dessus sans sortir du cadre de la présente invention.

Ainsi, par exemple, une bonne résistance à la déformation d'une paroi périphérique d'un bac d'abreuvement selon l'invention pourrait également être obtenue avec d'autres variantes de réalisation dans lesquelles les premières et deuxièmes déformations seraient définies chacune par deux renflements, chacune, mais pas selon l'invention, par deux renfoncements ou un renflement et un renfoncement. De même, les trapèzes formant les première et deuxième déformations pourraient être orientés de manière telle que leurs petites bases ou leurs grandes bases respectives soient alignées avec l'extrémité inférieure de la paroi périphérique. L'objectif d'amélioration de la robustesse de la paroi périphérique peut également être obtenu en prévoyant de conférer une profondeur constante aussi bien à la première qu'à la deuxième déformation.

## Revendications

1. Bac (1) pour l'abreuvement d'animaux comportant un fond (2) surmonté par une paroi périphérique (3) présentant une face interne (30), une face externe (31), une extrémité inférieure (32) reliée audit fond (2) et un chant supérieur (33) délimitant une ouverture d'accès (4) au volume interne dudit bac (1), ladite paroi latérale (3) comportant au moins deux flancs parallèles (35, 36) d'allure générale plane, au moins un desdits flancs (35, 36) comportant au moins une zone de renfort mécanique dans laquelle la paroi périphérique (3) présente une première déformation (5) et une deuxième déformation (6), **caractérisé en ce que** lesdites première et deuxième déformations sont imbriquées l'une dans l'autre et sont définies alternativement par un renflement et un renfoncement ou un renfoncement et un renflement ou deux renflements par rapport à la face externe (31) de la paroi périphérique (3).

2. Bac (1) pour l'abreuvement d'animaux selon la revendication 1, **caractérisé en ce que** la première déformation (5) s'étend sur une certaine hauteur depuis l'extrémité inférieure (32) de la paroi périphérique (3), tandis que la deuxième déformation (6) s'étend depuis l'extrémité inférieure (32) jusqu'au chant supérieur (33) de la paroi périphérique (3), lesdites premières et deuxième déformations (5, 6) présentant une forme de trapèze, les bases (50, 51) du premier trapèze formant la première déformation (5) étant de dimensions inférieures à celles des bases (60, 61) du second trapèze formant la deuxième déformation (6).

3. Bac (1) pour l'abreuvement d'animaux selon la revendication 2, **caractérisé en ce que** la grande base (51) du premier trapèze et la petite base (60) du second trapèze sont alignées le long de l'extrémité inférieure (32) de la paroi périphérique (3).

4. Bac (1) pour l'abreuvement d'animaux selon l'une quelconque des revendications précédentes, **caractérisé en ce que** la première déformation (5) présente une profondeur constante sur l'ensemble de sa hauteur tandis que la deuxième déformation (6) présente une profondeur qui diminue de manière linéaire entre l'extrémité inférieure (32) et le chant supérieur (33) de la paroi périphérique (3).

5. Bac (1) pour l'abreuvement d'animaux selon la revendication 4, **caractérisé en ce que** la première déformation (5) présente une profondeur comprise entre 5mm et 50mm tandis que la deuxième déformation (6) présente, au niveau de l'extrémité inférieure (32) de la paroi périphérique (3), une profondeur maximale (Pmax) comprise entre 5mm et 50mm.

6. Bac (1) pour l'abreuvement d'animaux selon l'une quelconque des revendications précédentes, **caractérisé en ce que** la zone de renfort s'étend sur une longueur supérieure à au moins le tiers de la longueur d'un flanc latéral (35, 36).

7. Bac (1) pour l'abreuvement d'animaux selon l'une quelconque des revendications 2 à 6, **caractérisé en ce que** la zone de renfort mécanique est délimitée par deux tronçons de raccordement (7, 8) s'étendant transversalement audit flanc d'allure plane (35, 36) le long de chacun des côtés du second trapèze, chacun desdits tronçons de raccordement (7, 8) comportant un bord inférieur (70, 80) formant un angle obtus avec la petite base (60) dudit second trapèze.

8. Bac (1) pour l'abreuvement d'animaux selon la revendication 7, **caractérisé en ce que** lesdits tronçons de raccordement (7, 8) sont symétriques par rapport à un plan perpendiculaire au fond (2) dudit bac (1).

9. Bac (1) pour l'abreuvement d'animaux selon l'une quelconque des revendications précédentes, **caractérisé en ce que** ladite paroi périphérique (3) présente au moins une constriction s'étendant sur au moins une partie de sa périphérie.

## Patentansprüche

1. Behälter (1) zum Tränken von Tieren, umfassend einen Boden (2), der von einer Umfangswand (3) umgeben ist, die eine Innenfläche (30), eine Außenfläche (31), ein mit dem Boden (2) verbundenes unteres Ende (32) und eine Oberkante (33), die eine Zugriffsöffnung (4) des Innenvolumens des Behälters (1) abgrenzt, wobei die Seitenwand (3) mindestens zwei parallele Flanken (35, 36) mit allgemein flachem Profil umfasst, wobei mindestens eine der Flanken (35, 36) mindestens einen mechanischen Verstärkungsbereich umfasst, in dem die Umfangswand (3) eine erste Verformung (5) und eine zweite Verformung (6) aufweist, **dadurch gekennzeichnet, dass** die erste und zweite Verformung miteinander verschachtelt sind und alternativ durch eine Ausbuchtung und eine Vertiefung oder eine Vertiefung und eine Ausbuchtung oder zwei Ausbuchtungen relativ zur Außenfläche (31) der Umfangswand (3) definiert sind.

2. Behälter (1) zum Tränken von Tieren nach Anspruch 1, **dadurch gekennzeichnet, dass** die erste Verformung (5) sich vom unteren Ende (32) der Umfangswand (3) über eine bestimmte Höhe erstreckt, während die zweite Verformung (6) sich vom unteren Ende (32) bis zur Oberkante (33) der Umfangswand (3) erstreckt, wobei die erste und zweite Verformung (5, 6) trapezförmig sind, wobei die Basen (50, 51) der ersten Trapezform, die die erste Verformung (5) bildet, kleinere Dimensionen aufweisen als die Basen (60, 61) der zweiten Trapezform, die die zweite Verformung (6) bildet.

3. Behälter (1) zum Tränken von Tieren nach Anspruch 2, **dadurch gekennzeichnet, dass** die große Basis (51) der ersten Trapezform und die kleine Basis (60) der zweiten Trapezform entlang dem unteren Ende (32) der Umfangswand (3) ausgerichtet sind.

4. Behälter (1) zum Tränken von Tieren nach einem der vorstehenden Ansprüche, **dadurch gekennzeichnet, dass** die erste Verformung (5) eine konstante Tiefe über ihre ganze Höhe aufweist, während die zweite Verformung (6) eine Tiefe aufweist, die zwischen dem unteren Ende (32) und der Oberkante (33) der Umfangswand (3) linear abnimmt.

5. Behälter (1) zum Tränken von Tieren nach Anspruch 4, **dadurch gekennzeichnet, dass** die erste Verformung (5) eine Tiefe zwischen 5 mm und 50 mm aufweist, während die zweite Verformung (6) am unteren Ende (32) der Umfangswand (3) eine maximale Tiefe (Pmax) zwischen 5 mm und 50 mm aufweist.

6. Behälter (1) zum Tränken von Tieren nach einem der vorstehenden Ansprüche, **dadurch gekennzeichnet, dass** der Verstärkungsbereich sich über eine Länge erstreckt, die mindestens ein Drittel der Länge einer seitlichen Flanke (35, 36) übersteigt.

7. Behälter (1) zum Tränken von Tieren nach einem der Ansprüche 2 - 6, **dadurch gekennzeichnet, dass** der mechanische Verstärkungsbereich durch zwei Verbindungsstücke (7, 8) abgegrenzt ist, die sich quer zur flachen Flanke (35, 36) entlang jeder der Seiten der zweiten Trapezform erstrecken, wobei jedes der Verbindungsstücke (7, 8) eine Unterkante (70, 80) umfasst, die mit der kleinen Basis (60) der zweiten Trapezform einen stumpfen Winkel bildet.

8. Behälter (1) zum Tränken von Tieren nach Anspruch 7, **dadurch gekennzeichnet, dass** die Verbindungsstücke (7, 8) relativ zu einer senkrecht zum Boden (2) des Behälters (1) verlaufenden Ebene symmetrisch sind.

9. Behälter (1) zum Tränken von Tieren nach einem der vorstehenden Ansprüche, **dadurch gekennzeichnet, dass** die Umfangswand (3) mindestens eine Verengung, die sich über mindestens einen Teil ihres Umfangs erstreckt, umfasst.

## Claims

1. A tray (1) for watering animals including a bottom (2) topped by a peripheral wall (3) having an inner face (30), an outer face (31), a lower end (32) connected to said bottom (2) and an upper edge (33) defining an access opening (4) to the inner volume of said tray (1), said side wall (3) including at least two parallel flanks (35, 36) having a flat general shape, at least one of said flanks (35, 36) including at least one mechanical reinforcement zone in which the peripheral wall (3) has a first deformation (5) and a second deformation (6), **characterized in that** said first and second deformations are nested in one another and are defined alternately by a bulge and a recess or by a recess and a bulge or by two bulges relative to the outer face (31) of the peripheral wall (3).

2. The tray (1) for watering animals according to claim 1, **characterized in that** the first deformation (5) extends over a certain height from the lower end (32) of the peripheral wall (3), while the second deformation (6) extends from the lower end (32) to the upper edge (33) of the peripheral wall (3), said first and second deformations (5, 6) having a trapezoidal shape, the bases (50, 51) of the first trapezoid forming the first deformation (5) having smaller dimensions than those of the bases (60, 61) of the second trapezoid forming the second deformation (6).

3. The tray (1) for watering animals according to claim 2, **characterized in that** the large base (51) of the first trapezoid and the small base (60) of the second trapezoid are aligned along the lower end (32) of the peripheral wall (3).

4. The tray (1) for watering animals according to any one of the preceding claims, **characterized in that** the first deformation (5) has a constant depth over its entire height, while the second deformation (6) has a depth that decreases linearly between the lower end (32) and the upper edge (33) of the peripheral wall (3).

5. The tray (1) for watering animals according to claim 4, **characterized in that** the first deformation (5) has a depth comprised between 5 mm and 50 mm, while the second deformation (6) has, at the lower end (32) of the peripheral wall (3), a maximum depth (Pmax) comprised between 5 mm and 50 mm.

6. The tray (1) for watering animals according to any one of the preceding claims, **characterized in that** the reinforcing zone extends over a length greater than at least one third of the length of a lateral flank (35, 36).

7. The tray (1) for watering animals according to any one of claims 2 to 6, **characterized in that** the mechanical reinforcing zone is defined by two connecting segments (7, 8) extending transversely to said generally planar flank (35, 36) along each of the sides of the second trapezoid, each of said connecting segments (7, 8) including a lower edge (70, 80) forming an obtuse angle with the small base (60) of said second trapezoid.

8. The tray (1) for watering animals according to claim 7, **characterized in that** said connecting segments (7, 8) are symmetrical relative to a plane perpendicular to the bottom (2) of said tray (1).

9. The tray (1) for watering animals according to any one of the preceding claims, **characterized in that** said peripheral wall (3) has at least one constriction extending over at least part of its periphery.
